# EUROPEAN PATENT APPLICATION

(11) **EP 0 727 400 A1**
(43) Date of publication of application: **21.08.1996**
(21) Application number: 96300617.6
(22) Date of filing: 30.01.1996
(51) Int. Cl.: C04B 35/634

(54) **Method for controlling viscosity in ceramic formulations**

(30) Priority: 15.02.1995 US 388920
(71) Applicant: ROHM AND HAAS COMPANY, Philadelphia, Pennsylvania 19106-2399 (US)
(72) Inventor: Berry, Amanda K., Dresher, Pennsylvania 19025 (US); Bogan Jr., Leonard E., Hatfield, Pennsylvania 19440 (US)
(74) Representative: Tanner, James Percival

(57) **Abstract**

A method for controlling viscosity in an aqueous ceramic slip is disclosed. The method utilizes selected urethane polymers. It allows for the formulation of ceramic slips with sufficient viscosity for conventional applications, and overcomes difficulties in controlling the viscosity of ceramic formulations with conventional agents. Settling of powders is also eliminated in ceramic slips by the use of the described polymers. The problem of bacterial growth which occurs in ceramic formulations using cellulosic thickeners is also avoided. The method may be used with any ceramic material which can be formulated in the form of an aqueous ceramic slip, including oxide and non-oxide ceramics. It provides control of viscosity under varied pH conditions, including conditions of pH less than 5. It also provides stability of viscosity during shelf storage.

## Description

The present invention relates to a method for controlling viscosity in ceramic materials by utilizing selected urethane polymers.

Ceramic parts are commonly formed from liquid dispersions of ceramic powders, known as ceramic slips. In order to process and handle a ceramic slip, it is frequently necessary to adjust the viscosity. The viscosity frequently must be increased, and various materials, known as thickeners, are known for increasing the viscosity of a ceramic slip. It is also desirable to have a viscosity which is adequately controlled such that it does not increase or decrease with ceramic formulation or processing conditions such as pH and ionic concentration. In addition, the viscosity should remain stable over a reasonable shelf storage period. For other ceramic formulations, such as, for example, glazes, adequate viscosity control may be critical for handling and uniform application.

Cellulosic materials are known in the art for use as thickeners. However, cellulosic thickeners are limited in their usefulness with ceramics because they do not perform well in the presence of divalent or multivalent ions which may be present in ceramic slips. Divalent or multivalent ions in aqueous ceramic slips may be present as impurities in the water supply, or they may be impurities in ceramic powders or powder additives and may leach from the powders into the ceramic slip.

Although polyacrylic acid has been used as a thickener for ceramic slips, it does not work well under conditions of low pH, defined as pH of less than 5. Low pH conditions are common in ceramic slips because some applications require acidic materials to be added to the slip. Under such low pH conditions, polyacrylic acid thickeners produce ceramic slips with variable viscosity. The pH of a ceramic slip may be as low as 2, depending upon what additives, if any, are present, and upon the application for which the ceramic is to be used.

The present invention overcomes these difficulties in controlling the viscosity of ceramic formulations with conventional thickeners. It eliminates variability in viscosity of a ceramic slip. The viscosity of a ceramic formulation prepared with the selected urethane polymers of the present invention is not affected by pH or by the presence of divalent or multivalent ions. Use of the polyurethanes provided in the present invention also eliminates the problem of growth of bacteria in a ceramic formulation which occurs with cellulosic thickeners, and maintains suspension of powders in the ceramic formulation by inhibiting settling of the powders.

A first aspect of this invention is a method for controlling viscosity in an aqueous ceramic formulation by mixing with the ceramic formulation a urethane polymer.

A second aspect of this invention is an aqueous ceramic slip formed from a ceramic formulation and a urethane polymer, wherein the ceramic formulation is from 0.1 volume percent to 70 volume percent ceramic powder and from 30 volume percent to 99 volume percent water, based on the total volume of the ceramic formulation; and the urethane polymer is present at a level of from 0.01 weight percent to 5 weight percent based on the weight of the water.

Two types of urethane polymers are useful in the method of the present invention. They are linear urethane polymers, and urethane polymers with hydrophobe "bunches". The linear urethane polymers are described in U.S. Patent No. 4,155,892, and the urethane polymers with hydrophobe "bunches" are described in U.S. Patent No. 4,426,485. The urethane polymers suitable for use in the method of this invention are water-soluble. The polymers have a weight average molecular weight within the range from 10,000 to 200,000.

The linear urethane polymers useful in the method of the present invention are preferably urethane polymers having at least two terminal hydrophobic groups and at least one additional hydrophobic group. These polymers may be prepared from at least one water-soluble polyether polyol, and at least one monofunctional hydrophobic organic compound selected from monofunctional active hydrogen compounds and organic monoisocyanates. A "monofunctional hydrophobic organic compound" is defined as an organic compound having only one group which is able to react with isocyanate, said group containing an active hydrogen atom. Other optional reactants used in preparation of the linear urethane polymers are one or more water-insoluble polyisocyanate, and one or more polyhydric alcohol or polyhydric alcohol ether. Examples of linear urethane polymers useful in the method of the present invention are the copolymers: (polyethylene glycol/isophorone diisocyanate/(ethylene glycol/4-nonylphenoxymethyl oxirane)); and (polyethylene glycol/dicyclohexymethane diisocyanate/n-hexanol).

The second type of urethane polymers useful in the method of the present invention are urethane polymers having hydrophobic segments, each containing at least two monovalent hydrophobic groups. The hydrophobic segments become associated with one another in an aqueous environment, and this association leads to the formation of a network within the polymers. The presence of two or more hydrophobic groups in a hydrophobic segment is referred to as "bunching", and the polymers are referred to as polymers having hydrophobic bunches. Typically, these polymers also contain water-soluble segments, each attached by a connecting segment to at least one hydrophobic group. That is, the polymers mav be represented as having the structure:

A-B-(-C)_{y})ₓ

wherein A is a water-soluble polymer segment; B is a connecting segment; and C is a hydrophobic group. The number of hydrophobic segments, B-C, defined as x, is greater than 0, and the number of hydrophobic groups, C, defined as y, is at least 1. Preferably, the number of hydrophobic segments is between 2 and 25. The number of hydrophobic segments is not critical, but there must be sufficient bunching of hydrophobic groups to lead to association of these groups when the polymer is in an aqueous environment. Hydrophobic groups include, for example, alkyl, cycloalkyl, aryl, alkaryl, and aralkyl hydrocarbons having 6 or more carbon atoms; fluoro substituted alkyl, cycloalkyl, aryl, alkaryl and aralkyl hydrocarbons having 3 or more carbon atoms and at least one fluorine atom; and organosiloxane containing organic radicals. Examples of useful urethane polymers having hydrophobic bunches include the copolymers: (polyethylene glycol /4,4'-methylenebis(isocyanatocyclohexane) /decyl alcohol); and (polyethylene glycol/1,2-hexadecane diol/isophorone diisocyanate).

The amount of urethane polymer used with a ceramic formulation is typically based on the weight of the water because it is the viscosity of the water which requires adjusting or controlling, and because the level of ceramic powder present in a given quantity of water can vary, depending upon the intended application. For the purpose of the present invention, the urethane polymer is present at a level of from 0.01 percent to 5 percent by weight, based on the weight of the water. Preferably, the level of urethane polymer is from 0.10 to 3 percent by weight, and most preferably from 0.25 to 2 percent by weight.

The method of the present invention is useful with any ceramic material which can be formulated in an aqueous medium such as an aqueous ceramic slip. Examples of ceramic materials useful with this method include alumina, boron nitride, silica, zirconia, clay, silicon carbide, silicon nitride, magnesium oxide, yttrium oxide, steatite and talc.

A dispersant may be a component in ceramic formulation, and, for purposes of the present invention, when a dispersant is used, it is preferably used at a level of from 0.01 to 10 percent by weight, based on the weight of the ceramic powder. The ceramic formulation may also optionally contain a polymeric binder at a level up to 15 percent by weight, based on the weight of the ceramic powder. The ceramic formulation may also optionally contain one or more pigments, such as, for example, chromium oxide, cobalt oxide, iron chromite, iron oxide, manganese dioxide, nickel oxide, or rutile.

The aqueous ceramic formulation may be prepared in a variety of ways. The order of the addition of the components is not critical. In one embodiment, the urethane polymer is added to an aqueous ceramic formulation which includes, as components, a ceramic powder and water. The amount of ceramic powder to be used in the ceramic formulation for the method of the present invention is from 0.1 to 70 percent by volume, based on the total volume of the ceramic formulation. The amount of water is preferably from 30 to 99.9 volume percent. These quantities are determined based on volume because the weight of a particular ceramic powder may vary. It may vary from one ceramic powder to another, and within samples of a particular ceramic, depending on its density and level of hydration. For example, the density of a ceramic material can vary from 2.2 g/cc for silica and boron nitride to 6 g/cc for barium titanate.

The following examples are intended to illustrate the method of the present invention and its effectiveness.

In the ceramic formulations of each of the following examples, no evidence of degradation of urethane polymer, or of microbial growth, was observed when the formulations were examined after at least one month.

Examples 1 through 4 illustrate the preparation of ceramic slips using the urethane polymers of the present invention. For Examples 2 and 3, the stability of the viscosity was measured as a function of time. The samples were stored at ambient temperature and humidity in a sealed container, and the viscosity was measured every 6-7 days for 35 days. The resulting data are shown in Table 1. In all examples, the viscosity of the ceramic formulations were measured by conventional means using a Brookfield viscometer. A #2 spindle was used, at 12 rpm.

### EXAMPLES 1-4: PREPARATION OF CERAMIC FORMULATIONS HAVING A RANGE OF VISCOSITIES

### Urethane Thickener Compositions for Examples 1 through9

Thickener A is a linear polyurethane thickener. It is a copolymer of: polyethylene glycol/isophorone diisocyanate/ (ethylene glycol/ 4-nonylphenoxymethyl oxirane).

Thickener B is a polyurethane thickener with hydrophobe bunches. It is a copolymer of: polyethylene glycol /4,4'-methylenebis(isocyanatocyclohexane)/decyl alcohol.

### Example 1 - Suspension of an Oxide Ceramic Powder at High Solids (70% Alumina)

In a 00 ball jar, 2.64 g of a polymeric ceramic dispersant (35% solids), 129.36 g de-ionized water and 308 g of Alcoa A-16SG alumina were combined with 710 g of alumina grinding media and milled for 30 minutes. To the resulting slurry were added 3.87 g of Thickener A (25% solids) and 0.1 g of Nopco NXZ defoamer. The slurry was milled for 15 minutes, resulting in slurry viscosity of 4500 cP.

### Example 2 - Suspension of an Oxide Ceramic Powder at Low Solids (15% Alumina)

In a 00 ball jar, 0.57 g of a polymeric ceramic dispersant (35% solids), 374 g de-ionized water and 66 g of Alcoa A-16SG alumina were combined with 710 g of alumina grinding media and milled for 30 minutes. To the resulting slurry were added 37.4 g of Thickener B (17.5% solids) and 0.1 g of Nopco NXZ defoamer. The slurry was milled for 15 minutes, resulting in slurry viscosity of 2000 cP.

### Example 3 - Suspension of an Oxide Powder and Binder in a Ceramic Slip

In a 00 ball jar, 1.88 g of a polymeric ceramic dispersant (35% solids), 218 g de-ionized water and 218 g of Alcoa A-16SG alumina were combined with 710 g of alumina grinding media and milled for 30 minutes. The resulting slurry was transferred to a 1 gallon mixing vessel and 16.30 g of a polymeric (53.5% solids) ceramic binder was stirred into the slurry. Next were added 13.08 g of Thickener A (25% solids) and 0.075 g of Nopco NXZ defoamer. The slurry was stirred to achieve complete dissolution of the thickener, resulting in a final viscosity of 2000 cP.

### Example 4 - Suspension of a Non-Oxide Ceramic Powder at Low Solids (8% Boron Nitride)

In a 00 ball jar, 1.41 g of a polymeric ceramic dispersant (50% solids), 404.8 g de-ionized water and 35.2 g of boron nitride were combined with 710 g of alumina grinding media and milled for 30 minutes. To the resulting slurry were added 28.9 g of Thickener B (17.5 % solids) and 0.1 g of Nopco NXZ defoamer. The slurry was milled for 15 minutes. The thickened slurry has viscosity 800 cP.

In Table 1 are shown viscosity measurements made on examples 2 and 3 over a period of 35 days. The viscosity data are in centipoise (cP)

**TABLE 1**

| VISCOSITY MEASUREMENTS OVER TIME FOR EXAMPLES 2 AND 3 | | |
|---|---|---|
| DAY | VISCOSITY(cP) (Example 2) | VISCOSITY(cP) (Example 3) |
| 1 | 2000 | 2000 |
| 8 | 2025 | 2000 |
| 15 | 1950 | 2050 |
| 22 | 2000 | 1975 |
| 29 | 2000 | 1950 |
| 35 | 2025 | 2000 |

The data in Table 1 indicate that the viscosity remained stable over 35 days in both Example 2, a formulation with 15% alumina and without a polymeric binder present; and in Example 3, a formulation with a polymeric binder present.

### CONTROL OF VISCOSITY UNDER VARIABLE pH CONDITIONS

### Examples 5 - 9

Examples 5-9 illustrate the stability in the viscosity of a ceramic slip prepared with a polyurethane as compared to conventional carboxymethyl cellulose and poly(acrylic acid) thickening agents. The data are shown in Table 2.

The initial pH of the ceramic slip was 8.6 in all cases. The viscosity at pH 8.6 is listed as "control" in the table. The pH of the prepared slip was adjusted to low pH with a solution which was 8.5% (by weight) phosphoric acid and to high pH with a solution which was 15% (by weight) ammonium hydroxide. The phosphoric acid or ammonium hydroxide was added dropwise until the desired pH, as measured by a pH electrode, was obtained.
**(a) Poly(acrylic acid) thickener (comparative):** In a 00 ball jar, 0.79 g of a polymeric dispersant (45% solids), 352 g de-ionized water, 88 g of Alcoa A-16SG alumina, and 0.8 g (solids) of Carbopol 691 were combined with 710 g alumina grinding media and milled for 1 hour. The resulting viscosity was 1200 cP (#2, 12 rpm).
**(b) Carboxymethyl cellulose thickener (comparative):** In a 00 ball jar, 0.79 g of a polymeric dispersant (45% solids), 352 g de-ionized water, 88 g of Alcoa A-16SG alumina, and 7.5 g of carboxymethyl cellulose (CMC 7M) were combined with 710 g alumina grinding media and milled for 1 hour. The resulting viscosity was 1150 cP (#2, 12 rpm).
**(c) Polyurethane Thickener A:** In a 00 ball jar, 0.79 g of a polymeric dispersant (45% solids), 352 g de-ionized water, 88 g of Alcoa A-16SG alumina, 30.9 g of Thickener A, and 0.1 g Nopco NXZ were combined with 710 g alumina grinding media and milled for 1 hour. The resulting viscosity was 1175 cP (#2, 12 rpm).

**TABLE 2**

| VISCOSITY MEASUREMENTS AS A FUNCTION OF pH | | | | |
|---|---|---|---|---|
| **Example** | **pH** | **Viscosity, cP (#2, 12 rpm)** | | |
| | | a | b | c |
| | | (comp) | (comp) | (PU) |
| 5 | 2.6 | 300 | 2200 | 1325 |
| 6 | 4 | 750 | 875 | 1350 |
| 7 | 6 | 1200 | 1150 | 1125 |
| control | 8.6 | 1175 | 1175 | 1175 |
| 8 | 8 | 1225 | 1100 | 1175 |
| 9 | 10.6 | 800 | 1000 | 1250 |

(a) (comparative thickener): Poly(acrylic acid) thickener (comparative)
(b) (comparative thickener): Carboxymethyl cellulose (comparative)
(c) (PU): Polyurethane thickener

The data indicate that with the polyurethane thickener, the viscosity does not vary significantly over the pH range from 2.6 to 10.6. With the comparative cellulosic thickener, the viscosity varies significantly in the lower pH region. With the comparative poly(acrylic acid), the viscosity is unstable at pH of less than 5 or greater than 9.

## Claims

1. A method for controlling viscosity in an aqueous ceramic formulation by mixing with the ceramic formulation a urethane polymer.

2. A method as claimed in claim 1 wherein the ceramic formulation comprises a ceramic powder at a level of from 0.1 percent to 70 percent by volume, based on the total volume of the ceramic formulation, and a liquid at a level of from 30 percent to 99 percent based on the total volume of the ceramic formulation, and wherein the urethane polymer is present at a level of from 0.01 weight percent to 5 weight percent based on the weight of the water.

3. A method as claimed in claim 1 or claim 2, wherein the ceramic powder is selected from the group consisting of alumina, boron nitride, silica, zirconia and clay.

4. A method as claimed in any preceding claim, wherein the urethane polymer comprises one or more polymers selected from the group consisting of: the copolymer of ethylene glycol, dicyclohexylmethane diisocyanate and n-hexanol; the copolymer of polyethylene glycol, 1,2-hexadecane diol and isophorone diisocyanate; the copolymer of polyethylene glycol, isophorone diisocyanate and the reaction product of ethylene glycol and nonylphenoxymethyl oxirane; the copolymer of ethylene glycol, 4,4'-methylenebis(isocyanatocyclohexane) and decyl alcohol.

5. An aqueous ceramic slip, which comprises a ceramic formulation and a urethane polymer, the ceramic formulation comprising from 0.1 volume percent to 70 volume percent of a ceramic powder and from 30 volume percent to 99 volume percent of water, based on the total volume of the ceramic formulation; and the urethane polymer being present at a level of from 0.01 weight percent to 5 weight percent, based on the weight of the water.

6. A ceramic slip as claimed in claim 5, wherein the ceramic powder is selected from the group consisting of alumina, boron nitride, silica, zirconia and clay.

7. A ceramic slip as claimed in claim 5 or claim 6 wherein the urethane polymer comprises one or more polymers selected from the group consisting of: the copolymer of polyethylene glycol, dicyclohexylmethane diisocyanate and n-hexanol; the copolymer of polyethylene glycol, 1,2-hexadecane diol and isophorone diisocyanate; the copolymer of polyethylene glycol, isophorone diisocyanate and the reaction product of ethylene glycol and nonylphenoxymethyl oxirane; the copolymer of polyethylene glycol, 4,4'-methylenebis(isocyanatocyclohexane) and decyl alcohol.

8. Use of a urethane polymer to control viscosity in an aqueous ceramic formulation.
